# EUROPEAN PATENT APPLICATION

(11) **EP 1 338 444 A1**
(43) Date of publication of application: **27.08.2003**
(21) Application number: 02028221.6
(22) Date of filing: 16.12.2002
(51) Int. Cl.: B60C 23/04, B60C 29/02

(54) **Combination of a valve and a pressure measurement device for a tyre**

(30) Priority: 20.02.2002 IT MI20020344
(71) Applicant: Polenghi Mario S.r.l., 20073 Codogno, Lodi (IT)
(72) Inventor: Polenghi, Luigi, 20073 Codogno, Lodi (IT)
(74) Representative: Giambrocono, Alfonso, Dr. Ing.

(57) **Abstract**

The combination (10) comprises an inflation valve (12) for a vehicle tyre, and a housing (14; 14A) for a device for measuring the inflation state of the tyre. The valve (12) is insertable through a through hole (15) provided in the wheel rim (16) on which the tyre is mounted. A gasket (18) is interposed between the body (20) of the valve (12) and the wheel rim (16). The body (20) of the valve (12) is laterally threaded on its outside to enable a nut (28) to be screwed thereon to fix the valve (12) to the wheel rim (16). The body (20) terminates internally with a head (22). Within the housing (14; 14A) there is provided a through aperture (26; 26A) through which the body (20) can pass but not the head (22). Between the housing (14; 14A) and the gasket (18) there is interposed an annular counteracting element (30) to ensure the sealing of the gasket (18) when the fixing nut (28) has been tightened. As a consequence of the tightening of the fixing nut (28) the head (22) cooperates with the corresponding part (24) of the inner surface of the housing (14; 14A) to fix the housing (14; 14A) to the body (20) in such a manner as to prevent the housing from coming into contact with the wheel rim (16).

## Description

The present invention relates to a combination comprising an inflation valve for a vehicle tyre and an housing for a device for measuring the inflation state of the tyre.

A combination of this type is described in EP-B-0 751 017, in which said device comprises a transducer activated by the internal pressure of the tyre, a transmitter for transmitting the pressure value measured by the transducer, and a receiver positioned external to the tyre (normally on the vehicle dashboard). The transducer and the transmitter, together with a powering battery, form part of an electronic circuit contained in a housing or container positioned within the tyre in correspondence with the valve. This housing is fixed to the valve body in an orientable manner (as described hereinafter) so that it can be adapted to the various types of wheel rim, but also presents two lateral feet which, whatever the orientation, must always rest against the base of the wheel rim.

The fact that said housing rests directly against the wheel rim base via the two feet can be deleterious for the components contained in the housing. As a matter of fact, this latter directly receives the impacts and vibrations to which the wheel rim is subjected, with possible damage to the electronic circuit components contained in the housing, as well as a negative influence on the measurements.

As in the case of conventional tyre valves, this valve also possesses, for its fixing to the wheel rim, a nut to be screwed onto the laterally threaded outer end of the valve body. It should also be noted that said housing is fixed to the valve body by a specific screw which is located inside the wheel rim and in which a coaxial channel is provided, through which the tyre is inflated. This screw is screwed into a threaded coaxial cavity provided in the valve body, its purpose being to fix to the inner end of the valve body an element the outer surface of which is in the form of a convex spherical cap to mate with a corresponding recessed surface provided on the outer surface of the housing. Along this recessed surface there is provided in the outer wall of the housing a slot through which said screw is inserted.

The coaxial cavity in the valve body through which the screw is inserted has necessarily a fairly small diameter (there being materially insufficient space to provide a cavity of greater diameter) so that the screw itself can only be of fairly small diameter. A first direct consequence of this is that the tightening torque for this screw is only modest, so that there is no guarantee against its slackening (causing movement of the housing or its detachment from the valve).

Another direct consequence is that the small diameter of the coaxial channel of this screw (through which the tyre is inflated), this diameter being non-standard, means that tyre inflation requires more time than if valves with a standard channel were used.

An object of the present invention is to provide a combined valve and measurement device for the inflation state of a tyre which does not present the aforedescribed drawbacks.

It should also be noted that in those embodiments of the combination illustrated in EP-B-0 751 017, except for the said housing, the rest of the combination is of considerable overall size and weight, so much so that in the actual marketed embodiment a light alloy has been used instead of the traditional brass normally used for forming tyre valves.

Another object of the invention is therefore to provide a combination of the aforesaid type in which that part not constituted by the housing presents a smaller overall size than the relative part of EP-B-0 751 017, and in particular such as to enable brass to be used without it resulting in excessive weight.

The initially aforestated object is attained by the combination according to the present invention, characterised in that:
- within the housing there is provided a through aperture through which the valve body can pass but not the head;
- between the valve housing and gasket there is interposed an annular counteracting element to ensure the sealing of the gasket when the fixing nut has been tightened;
- as a consequence of the tightening of the fixing nut the head cooperates with the corresponding part of the inner surface of the housing to fix the housing to the valve body in such a manner as to prevent the housing from coming into contact with the wheel rim. Preferably in the aforedescribed combination, that head surface part which cooperates with said inner surface part of the housing has its convexity facing the gasket, said surface parts being cylindrical or spherical and mating in order to be able to slide one on the other within a determined range, the through aperture provided in the housing being in the form of a slot to enable the orientation of the housing to be adjusted relative to the valve by sliding the two mating surface parts relative to each other. This orientation must always be such that the housing does not come into contact with the wheel rim. The fact that the housing is applied only to the valve body and is spaced from the wheel rim (so that there is no direct contact with this latter), and that the valve body is mounted on the wheel rim via an interposed conventional elastic mounting gasket, prevents any impacts and vibrations to which the wheel is subjected being directly transmitted to the housing and hence to the components contained in it.

Moreover, given that the housing is fixed in position by the same nut which fixes the valve onto the wheel rim, and as this nut has a considerable diameter compared with the diameter of the fixing screw described in EP-B-0 751 017, the nut can be tightened with a much greater torque than that with which said screw can be tightened. This constitutes a guarantee against loosening of this nut (the valve fixing nuts, when tightened to the required torque, are totally reliable), and ensuring at the same time that the fixing of the housing in its correct position to the valve body remains effective with time.

Again, as said fixing screw, which influences the diameter of the passage channel for the tyre inflation air, is not present in the combination of the present invention, this channel (conveniently provided in the head of the valve body) can have a standard diameter, so that the tyre inflation time is normal.

Apart from the housing (which can be of sheet metal or plastic), the combination of the present invention enables at least some of its metal parts to have dimensions which overall are much less than those of the combination described in EP-B-0 751 017, so that these parts can be safely formed of brass in the traditional manner, with cost savings.

The invention will be more easily understood from the ensuing description of one exemplifying embodiment thereof. In this description reference is made to the accompanying drawings, in which:
Figure 1 is a section through the combination of the present invention taken on a radial (with respect to the tyre) plane passing through the valve axis;
Figure 2 is a section therethrough on the line 2-2 of Figure 1;
Figure 3 shows three variants of the head of the valve body;
Figure 4 is similar to Figure 1 and shows a variant of the combination represented in this latter figure;
Figure 5 is a section therethrough on the line 5-5 of Figure 4.

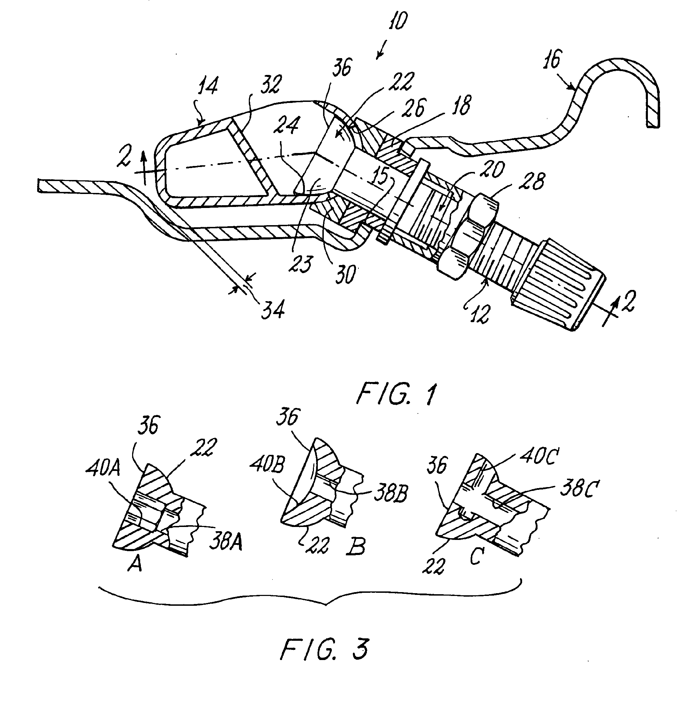

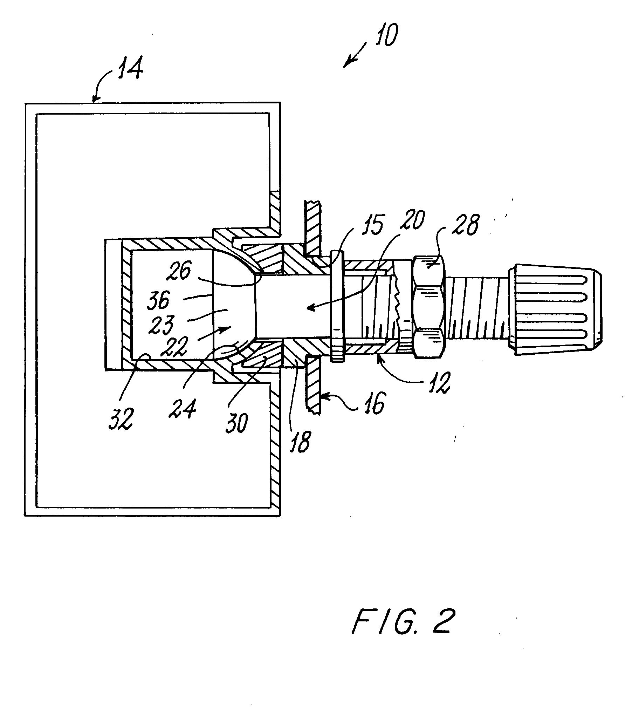

As can be seen in Figures 1 and 2, the combination 10 shown therein comprises a valve 12 and a housing 14 to receive at least one pressure sensor, a transmitter for transmitting the measurements taken by the sensor, and the relative electronic circuit powered by a battery (preferably of button type). The valve 12 is mounted in conventional manner within a through hole 15 provided in a wheel rim 16 (of which only a partial radial section is shown in Figures 1 and 2) for receiving a tyre (not shown). Within the hole 15, between the body 20 of the valve 12 and the wheel rim 16, there is inserted an elastic gasket 18 providing a seal.

The housing 14 of the combination 10 is shown very schematically in Figures 1 and 2. It can take the most varied forms, depending on the components to be contained and their size. It should be noted that a temperature sensor can also be present in the housing 14. In that case the transmitter will also transmit to the receiver the measurements taken by the temperature sensor, to be displayed, or otherwise made accessible, by relative suitable means.

Returning to the valve 12, it can be seen that this is substantially of conventional type, but with the difference that the inner end of its body 20 comprises a terminal head 22 the lateral surface of which is in the form of a ring 23 with a spherical surface, coaxial to the valve body and having its convexity facing the gasket 18 of the valve 12. When the combination 10 is mounted in position, this ring 23 mates with a corresponding ring 24 of concave spherical surface provided in the inner wall of the housing 14 about a slot 26 through which the body 20 of the valve 12 has been previously inserted. The slot 26 enables the two mating surfaces 23 and 24 to slide one on the other within a determined range, so that the housing 14 can be suitably orientated (as explained hereinafter) relative to the valve 12 in accordance with the type of wheel rim. To lock both the valve 12 and the housing 14 in position it is sufficient, using a suitable tightening torque, to tighten down a locking nut 28 screwable onto the externally threaded body 20 of the valve 12. It should be noted that a similar nut is also provided in conventional tyre valves and also in the valves illustrated in EP-B-0 751 017 to fix the valve to the wheel rim. However in the case of the present invention, because of the presence of the said two mating spherical rings 23 and 24, the slot 26 and an annular counteracting element 30 interposed between the gasket 18 and the housing 14, the nut 28 also simultaneously fixes the housing 14 in position.

It should also be noted that, as in the case of conventional nuts of this type, the nut 28 can be tightened with a torque such as to ensure against its loosening with time. Consequently there is the assurance that the housing 14 also remains fixed with time and in its correct position relative to the valve 12. In this respect it should be noted that in the combination 10 of the present invention the housing 14 must not come into contact with the wheel rim (between the two there must always be a minimum space indicated in Figure 1 by 34, in order not to directly transmit to the housing 14 those impacts and vibrations to which the wheel rim 16 is subjected). Consequently such impacts and vibrations can be transmitted to the housing 14 only via the gasket 18 of the valve 12, which has a damping effect. To accentuate this characteristic, the gasket 18 is conveniently thicker than a conventional gasket.

To ensure that there is no contact between the wheel rim 16 and the housing 14, an angular width can be chosen for the slot 26 which prevents such contact. If this for some reason is not possible, the operator who installs the combination 10 should be adequately instructed and be provided for example with an element of adequate thickness (equal to the minimum allowable thickness 34) to be temporarily interposed between the wheel rim 16 and the housing 14 during installation, to ensure that there is no contact between the two.

As is immediately apparent from the aforegoing, the combination 10 can be installed much more simply and rapidly than the combination described in EP-B-0 751 017. Moreover compared with this latter, the combination 10 is (in particular with regard to the valve 12) much simpler, less costly and of decidedly smaller size.

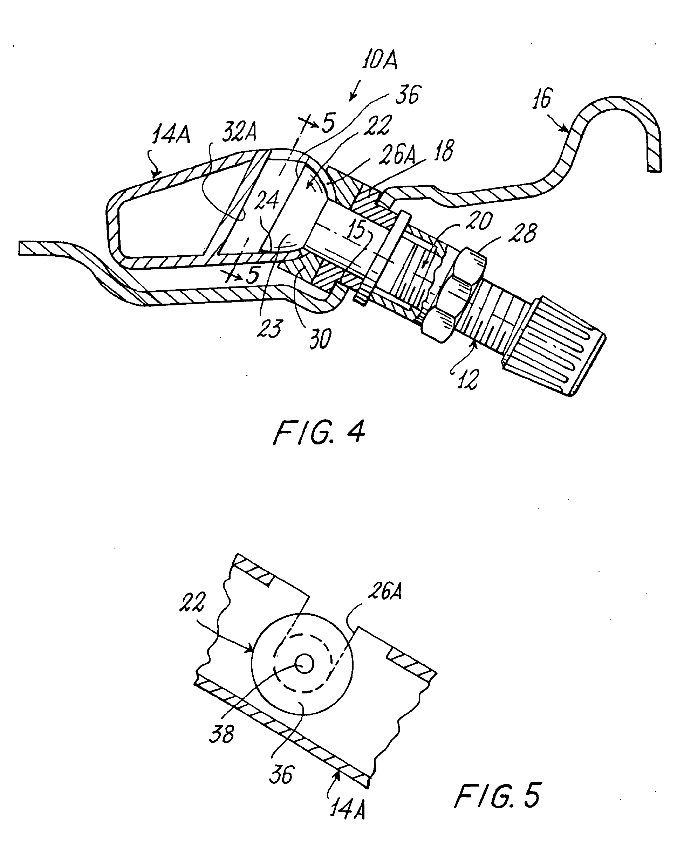

The operations involved in installing the combination 10 will not be described in detail as they are evident from the aforegoing. It is sufficient to note that the head 22 of the body of the valve 12 has to be held stationary relative to the wheel rim 16 while the nut 28 is screwed down. For this purpose, there are provided engagement means (the hexagonal coaxial recess 40A or the circular arc-shaped notch 40B respectively) in the flat outer face 36 of the head 22 (into which there also opens the channel 38 through which the tyre is inflated, and indicated by 38A, 38B and 38C in the three versions A, B and C of the head 22 shown in Figure 3), or a radial lateral hole 40C can be provided in the head 22 for a pin.

In the variant 10A (Figures 4 and 5) of the combination of the present invention, the only difference compared with the combination 10 (Figures 1 and 2) is essentially that the slot 26A is open at its upper end. This enables the body 20 of the valve 12 to be inserted laterally into the slot 26A. It is thus possible to considerably reduce the width of the open cavity 32A (Figure 4) compared with that of the open cavity 32 of Figures 1 and 2, to hence have more space for the electronic components within the housing 14A, for equal external overall dimensions.

## Claims

1. A combination (10; 10A) comprising an inflation valve (12) for a vehicle tyre, and a housing (14; 14A) for a device for measuring the inflation state of the tyre, the valve (12) being mountable through a through hole (15) provided in the wheel rim (16) which carries the tyre, a gasket (18) being interposed between the body (20) of the valve (12) and the wheel rim (16), the body (20) of the valve (12) being laterally threaded on its outside to enable a nut (28) to be screwed thereon to fix the valve (12) to the wheel rim (16), the body (20) terminating internally with a head (22),
**characterised in that**:
- within the housing (14; 14A) there is provided a through aperture (26; 26A) through which the body (20) can pass but not the head (22);
- between the housing (14; 14A) and the gasket (18) there is interposed an annular counteracting element (30) to ensure the sealing of the gasket (18) when the fixing nut (28) has been tightened;
- as a consequence of the tightening of the fixing nut (28) the head (22) cooperates with the corresponding part (24) of the inner surface of the housing (14; 14A) to fix the housing (14; 14A) to the body (20) in such a manner as to prevent the housing from coming into contact with the wheel rim (16).

2. A combination (10; 10A) as claimed in claim 1, wherein that surface part (23) of the head (22) which cooperates with the inner surface part of the housing (14) has a convexity facing the gasket (18), the surface parts (23, 24) being spherical or cylindrical and mating in order to be able to slide one on the other within a determined range, the through aperture (26; 26A) provided in the housing (14; 14A) being in the form of a slot to enable the orientation of the housing (14; 14A) relative to the valve (12) to be adjusted by sliding the two mating surface parts (23, 24) relative to each other.

3. A combination (10A) as claimed in claim 2, wherein the slot (26A) is open at one of its ends to enable the body (20) of the valve (12) to be inserted laterally into it (26A).

4. A combination (10; 10A) as claimed in claim 1, wherein the channel (38) of the valve (12) through which the tyre inflation gas passes opens at the free end (36) of the head (22), in a coaxial position.

5. A combination (10; 10A) as claimed in claim 4, wherein the head (22) presents engagement means (40A, 40B, 40C) to facilitate the tightening of the fixing nut (28).

6. A combination (10; 10A) as claimed in claim 5, wherein the engagement means comprise a hexagonal cavity (40A) coaxial to the mouth of the channel (38) of the valve (12).

7. A combination (10; 10A) as claimed in claim 5, wherein the engagement means comprise, in correspondence with the mouth of the channel (38) of the valve (12), a recess for a screwdriver or a notch (40B) for a coin.

8. A combination (10; 10A) as claimed in claim 5, wherein a radial hole (40C) is provided in the lateral surface (23) of the head (22), for the insertion of a pin.

9. A combination (10) as claimed in claim 2, wherein in the outer surface of the housing (14) there is provided an open cavity (32) for access to the slot (26) provided in the housing (14), the body (20) of the valve (12) being insertable into the slot (26) by way of said cavity (32).

10. A combination (10A) as claimed in claim 3, wherein the cavity (32A) is provided in the outer surface of the housing (14A) to enable the head (22) of the body (20) of the valve (12) to be received when the body (20) is inserted laterally into the open slot (26A).
